# EUROPÄISCHE PATENTSCHRIFT

(11) **EP 1 655 847 B1**
(45) Veröffentlichungstag und Bekanntmachung des Hinweises auf die Patenterteilung: **08.04.2015**
(21) Anmeldenummer: 05109727.7
(22) Anmeldetag: 19.10.2005
(51) Int. Cl.: G01C 21/36, G06F 3/0482

(54) **Bedienvorrichtung**
Control Device
Dispositif de commande

(30) Priorität: 08.11.2004 DE 102004053763
(43) Veröffentlichungstag der Anmeldung: 10.05.2006
(73) Patentinhaber: ROBERT BOSCH GMBH, 70442 Stuttgart (DE)
(72) Erfinder: Flick, Bernd, 31199, Diekholzen (DE)

(56) Entgegenhaltungen:
- EP-A- 0 576 030
- WO-A2-02/10892
- US-A1- 2001 019 338
- US-A1- 2002 030 754
- US-A1- 2004 217 991

## Beschreibung

### Stand der Technik

Die Erfindung geht aus von einer Bedienvorrichtung mit einer Menüsteuerung nach der Gattung des Hauptanspruchs. Aus der DE 44 36 734 ist bereits ein Autoradio mit einer Menüsteuerung bekannt, bei dem das Benutzerverhalten erfasst wird. Hierzu wird die Häufigkeit einer Bedienaktion bis zu einem Maximalwert aufsummiert und die am häufigsten ausgewählte Bedienaktion wird zuerst angegeben. Bevorzugt schließen sich die übrigen Bedienaktionen in der Reihenfolge der Häufigkeit ihrer Auswahl an. Die Bedienführung wird hierbei automatisch an die unterschiedlichen Häufigkeiten angepasst. Bevorzugt erfolgt dabei eine Erfassung der Häufigkeiten personenbezogen, so dass für jeden Benutzer eine seinen Bedieneigenheiten entsprechende Darstellung erfolgen kann.

Aus der US 2002/0030754 A1 ist eine elektronische Kamera bekannt, bei der in Abhängigkeit von einer Benutzung die Reihenfolge von Menüpunkten, die in einem Bildschirm der Kamera dargestellt werden, automatisch geändert wird. Die automatische Änderung der Anordnung der Menüpunkte kann auch durch einen Benutzer deaktiviert werden.

Aus der EP 0 576 030 A2 ist ein tragbarer Computer mit einer Funktion zur Veränderung von Menüsymbolen auf einem Bildschirm bekannt. Nach Auswahl einer Funktion "Menü-Rearrangement" kann ein Benutzer entsprechende Symbole in dem Bildschirm verschieben. Die Verschiebung kann dann durch den Benutzer bestätigt werden.

Aus der US 2001/001938 A1 ist ein Datenverarbeitungssystem bekannt, bei dem ein Menümanagement für Programme erfolgt, bei denen Benutzereingaben durchgeführt werden. In Abhängigkeit von der Bedienhäufigkeit wird eine Reihenfolge der Menüpunkte gewählt.

Aus der US 2004/0217991 A1 erfolgt eine Anordnung von Menüpunkten in Abhängigkeit von der Häufigkeit ihrer Benutzung.

### Vorteile der Erfindung

Die erfindungsgemäße Bedienvorrichtung mit den Merkmalen des Hauptanspruchs und das erfindungsgemäße Verfahren zur Darstellung einer Menüauswahl in einer Anzeige haben demgegenüber den Vorteil, dass vor einer Änderung der Anordnung der Menüpunkte eine Bestätigung durch den Benutzer vorliegen muss. Hiermit wird vermieden, dass der Benutzer durch eine automatische Änderung der Menüpunkte verwirrt wird. Zudem können Änderungen des Bedienverhaltens, die nur kurzfristig erfolgt sind, z.B. während einer Urlaubsfahrt, nicht dazu führen, die gesamte, dem Fahrer bekannte Bedienstruktur zu verändern. Entfällt z.B. während eines Urlaubs ein vom Fahrer häufig verwendeter Menüpunkt, z.B. eine direkte Auswahl seiner Arbeitsstätte als Fahrziel, so wäre er ansonsten nach dem Urlaub gezwungen, diese Funktion neu einzugeben. Lehnt der Benutzer eine entsprechende Änderung des Bedienmenüs ab, steht ihm diese Funktion auch weiterhin ungeändert zur Verfügung.

Erfindungsgemäß wird eine geänderte Anordnung dem Benutzer zur Bestätigung vorgeschlagen. Der Benutzer kann hierdurch gegenüber einer bloßen Ausgabe, dass das Menü angepasst wird, unmittelbar erkennen, welche Änderungen durchgeführt werden sollen. Daher kann er besser über die vorgeschlagenen Änderungen entscheiden. So ist es ferner vorteilhaft, die Häufigkeit des Aufrufs wenigstens zweier Menüpunkte zu berücksichtigen und eine Änderung durchzuführen, wenn ein Menüpunkt, der niedriger eingruppiert ist oder der sich sogar in einem Untermenü befindet, häufiger aufgerufen wird, als ein in einer höheren Menüebene aufgeführter Menüpunkt bzw. ein in einer Liste höher angesiedelter Menüpunkt.
Durch die in den Unteransprüchen aufgeführten Maßnahmen sind vorteilhafte Weiterbildungen und Verbesserungen der erfindungsgemäßen Bedienvorrichtung und des erfindungsgemäßen Verfahrens zur Darstellung einer Menüäuswahl in einer Anzeige möglich. Insbesondere kann hierbei eine Hysterese vorgesehen werden, so dass bei geringen Änderungen der Häufigkeit nicht sofort eine Änderung vorgeschlagen wird. Erst wenn beispielsweise eine Funktion fünf mal (Anzahl) öfter aufgerufen wird, als eine andere, mindestens aber 10% häufiger aufgerufen wurde, als die andere Funktion, so wird erst dann einem Benutzer eine Änderung des dargestellten Menüs vorgeschlagen. Hierdurch wird vermieden, dass kleinere Häufigkeitsunterschiede zu häufigen Änderungen in der Menüstruktur führen können.

Ferner ist es vorteilhaft, dass ein Benutzer selbst eine Anpassung der Menüstruktur verlangen kann. Hierdurch kann er gezielt, z.B. vor Beginn oder zum Ende einer Fahrt, die Menüstruktur anpassen lassen. Mögliche Änderungen während der Fahrt können hierdurch vermieden oder zumindest verringert werden.

### Zeichnungen

Ausführungsbeispiele der Erfindung sind in der Zeichnung dargestellt und in der nachfolgenden Beschreibung näher erläutert.

Es zeigen Figur 1 eine erfindungsgemäße Bedienvorrichtung mit einer Menüsteuerung, Figur 2 ein erfindungsgemäßes Verfahren zur Darstellung einer Menüauswahl in einer Anzeige, Figuren 3 bis 10 Ausführungsbeispiele für Darstellungen bei einer erfindungsgemäßen Menüauswahl durch einen Benutzer in einer Anzeige.

### Beschreibung des Ausführungsbeispiels

Die erfindungsgemäße Bedienvorrichtung und das erfindungsgemäße Verfahren können für beliebige, mit einer Menüsteuerung versehene elektronische Vorrichtungen verwendet werden. Insbesondere sind sie dann vorteilhaft, wenn ein Benutzer eine Vorrichtung bedienen muss und zugleich noch andere Aufgaben wahrnehmen muss. Dies ist insbesondere bei Fahrerinformationssystemen in Fahrzeugen der Fall, bei denen ein Benutzer zwar einerseits Informationen des Fahrerinformationssystems wahrnehmen soll, z.B. Navigationshinweise. Andererseits muss der Fahrer sich in erster Linie jedoch um die Fahrsicherheit und um die Sicherheit des Fahrzeugs kümmern, so dass er durch das Fahrerinformationssystem nicht unnötig von dieser Aufgabe abgelenkt werden sollte. Durch eine vorteilhafte und für ihn leicht zu erfassende Menüsteuerung, die ihm die wesentlichen, von ihm gewünschten Funktionen entsprechend seinen Bediengewohnheiten präsentiert, kann die Bedienung durch den Fahrer erleichtert werden. Daher wird die vorliegende Erfindung im Folgenden am Beispiel eines Fahrerinformationssystems in einem Kraftfahrzeug erläutert.

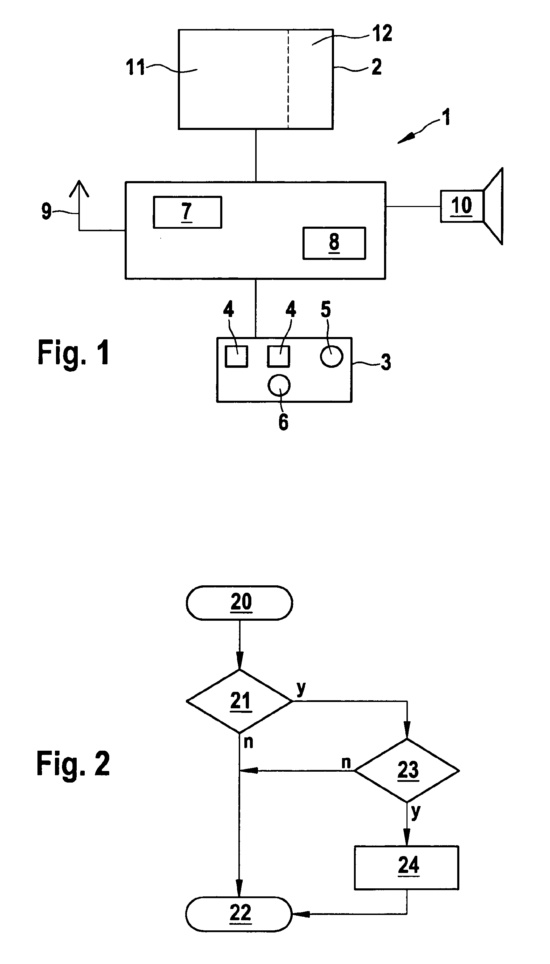

Die Figur 2 zeigt ein Fahrerinformationssystem 1, das in einem Fahrzeug angeordnet ist. Das Fahrerinformationssystem 1 weist eine Anzeige 2 auf, in der Ausgaben des Fahrerinformationssystems 1 dargestellt werden. Das Fahrerinformationssystem 1 ist in einer bevorzugten Ausführungsform zumindest als ein Autoradio ausgeführt. Es kann jedoch auch stattdessen oder alternativ andere Funktionen aufweisen, wie z.B. eine Fahrzeugnavigation, eine Bordcomputerfunktionalität, eine Unterstützung des Fahrers bei der Bedienung des Fahrzeugs, eine Anzeige von Fahrzeuggrößen bzw. Fahrzeugmesswerten oder eine Videofunktion. Hierzu ist die Anzeige insbesondere in einer Mittelkonsole des Fahrzeugs angeordnet. Die Anzeige kann jedoch auch unmittelbar vor dem Fahrer innerhalb eines Kombinationsinstrumentes zur Anzeige von Fahrzeuggrößen vorgesehen sein. Ferner ist auch eine Ausführung der Anzeige als ein sogenanntes Head-Up-Display möglich, bei dem ein Bild in einen Bereich der Windschutzscheibe vor dem Fahrer projiziert wird.

Die Anzeige 2 wirkt mit einer Bedieneinheit 3 zusammen, die das Fahrerinformationssystem 1 steuert. Hierzu weist die Eingabeeinheit Drucktasten 4, Drehregler 5 und/oder wenigstens einen Dreh-Drück-Knopf 6 auf, mit dem sowohl über eine Drehung eine Funktion ausgewählt werden kann, als auch über einen Druck bestätigt werden kann. Ferner sind auch beliebige andere Eingabeelemente, wie z.B. Schieberegler oder Wippen, möglich. In der Anzeige werden auswählbare Funktionen dargestellt, die mittels der Bedienelemente 4, 5, 6 in einer ersten Ausführungsform unmittelbar ausgewählt oder in einer zweiten Ausführungsform zuerst angewählt und dann bestätigt werden. Zur Verarbeitung dieser Signale und zur Darstellung der auswählbaren Bedienfunktionen weist das Fahrerinformationssystem 1 eine Recheneinheit 7 auf, die das Fahrerinformationssystem 1 steuert. Daten für eine Menüsteuerung sind in einem Speicher 8 abgelegt, aus dem die Recheneinheit 7 sowohl die Bedienfunktion, als gegebenenfalls auch deren grafische Darstellung zur Darstellung der Anzeige 2 entnimmt. Ist das Fahrerinformationssystem 1 z.B. als ein Radio oder ein sogenanntes dynamisches Navigationssystem mit einer Überwachung von Verkehrsmeldungen ausgeführt, so ist es mit einer Antenne 9 verbunden. Ferner ist das Fahrerinformationssystem 1 bevorzugt mit einer akustischen Ausgabeeinheit 10 mit zumindest einem Lautsprecher verbunden. Über die akustische Ausgabeeinheit 10 können auch Rückmeldungen über die Bedienung ausgegeben werden.

Werden Bedienfunktionen in der Anzeige 2 ausgewählt, so zählt die Recheneinheit 7 die Anzahl der Auswahl der jeweiligen Bedienungen. Dies kann z.B. dadurch erfolgen, dass ein Zähler stets um 1 hoch gesetzt wird, wenn eine entsprechende Bedienfunktion ausgewählt wird. Jedoch ist es auch möglich, das Verhältnis der Auswahl der einzelnen Bedienfunktionen zueinander festzulegen. Bevorzugt wird das Bedienverhalten insbesondere nichtflüchtig abgelegt. In einer weiteren Ausführungsform kann die Ablage auch einzelnen Bedienpersonen zugeordnet werden, die sich bei der Bedienung des Fahrerinformationssystems entsprechend durch eine Codeeingabe oder durch eine biometrische Erkennung, z.B. mit einer Fingerabdruckerkennung, ausweisen. Die Recheneinheit 7 ermittelt dann anhand der festgelegten Bedienhäufigkeiten eine Darstellung von Bedienfunktionen in der Anzeige 2. Dies kann einerseits lediglich das Hauptmenü, andererseits aber auch bei einer mehrstufigen Menüstruktur die Anordnung der Bedienfunktionen im Hauptmenü und in den Untermenüs beinhalten. In einer ersten Ausführungsform ist die Anzeige 2 derart ausgestaltet, dass in einem ersten Anzeigebereich 11 in herkömmlicher Weise die Bedienfunktionen entsprechend der normalen Menüstruktur auswählbar sind. Die Anzeige 2 weist einen zweiten Bereich 12 auf, in dem die am häufigsten ausgewählten Funktionen dargestellt werden. In einer weiteren Ausführungsform wird nur eine an das Bedienverhalten des Benutzers angepasste Menüstruktur dargestellt.

In bevorzugter Weise ist bei Auslieferung des Gerätes werksseitig eine bestimmte Menüabfolge vorgegeben. Stellt die Recheneinheit 7 nach einer ersten Bedienung durch den Benutzer, aber auch zu jedem späteren Zeitpunkt fest, dass die Häufigkeit einer Auswahl bestimmter Funktionen von ihrer Reihenfolge und/oder ihrer Position in der Menüstruktur abweicht, so schlägt sie einem Benutzer eine Anpassung der Menüstruktur vor. Die Durchführung dieses Verfahrens ist anhand der Figur 2 dargestellt. Ausgehend von einem Initialisierungsschritt 20, mit dem eine Überprüfung der Menüstruktur eingeleitet wird, wird zu einem ersten Prüfschritt 21 verzweigt. Eine derartige Initialisierung kann z.B. bei einem Einschalten des Motors, bei einem Ausschalten des Motors oder nach einer vorgegebenen Zeit bzw. nach einer vorgegebenen Anzahl eingegebener Bedienfunktionen durchgeführt werden. In dem ersten Prüfschritt 21 wird überprüft, ob die Reihenfolge der Bedienaktionen in der Menüsteuerung von der Häufigkeitsverteilung abweicht. Liegt keine Abweichung vor und sind die einzelnen Bedienfunktionen entsprechend der Reihenfolge der Häufigkeit ihrer Auswahl angeordnet, wird das Verfahren in einem Endschritt 22 beendet. Wird dagegen eine Abweichung festgestellt, so wird zu einem Abfrageschritt 23 verzweigt. In dem Abfrageschritt 23 wird ein Benutzer gefragt, ob er eine Änderung der Menüdarstellung wünscht. In einer bevorzugten Ausführungsform wird ihm die gewünschte Änderung hierbei dargestellt. Der Benutzer kann nun entscheiden, ob er die Änderung annimmt oder nicht. Lehnt er die Änderung ab, so wird ebenfalls zu dem Endschritt 22 weiterverzweigt. Der Endschritt 22 wird auch dann erreicht, wenn der Benutzer für eine vorgegebene Zeit, z.B. eine Minute, keine Bestätigung vorgenommen hat. Wird dem Benutzer ein Vorschlag angeboten, so wird dies bevorzugt durch eine kurze akustische Ausgabe unterstützt. Nimmt der Benutzer die vorgeschlagene Änderung an, so wird in einem Änderungsschritt 24 die Menüdarstellung geändert und in Folge geändert angezeigt. Danach wird das erfindungsgemäße Verfahren mit dem Endschritt 22 beendet.

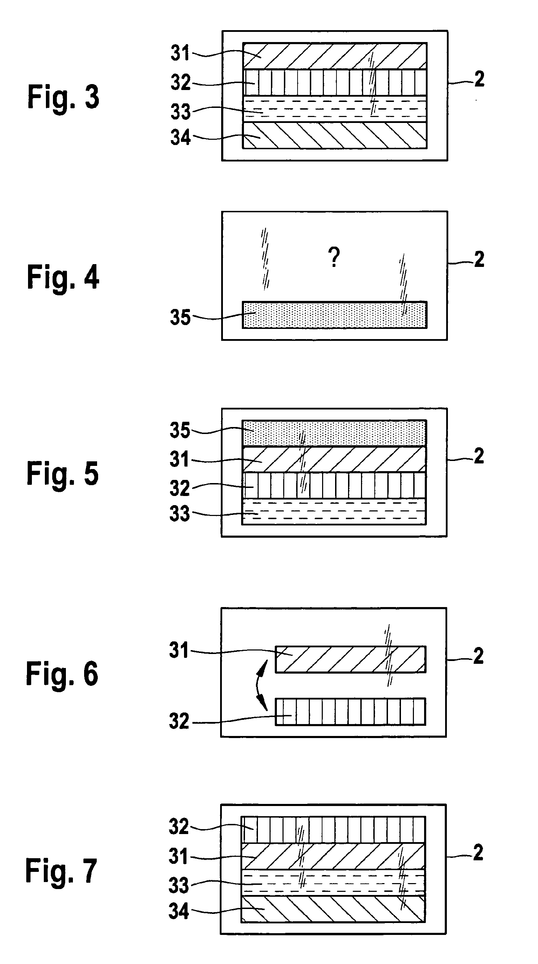

In der Figur 3 ist ein Beispiel für eine Menüauswahl in der Menüanzeige dargestellt. Hierbei sind vier Menüfelder 31, 32, 33, 34 gezeigt, mit denen jeweils unterschiedliche Funktionen auswählbar sind. Zur zeichnerischen Darstellung der unterschiedlichen Funktionen sind die einzelnen Menüfelder jeweils unterschiedlich schraffiert. Die Befehle können sich dabei auf eine bestimmte Funktion beziehen, z.B. lediglich die Radiofunktion der Fahrerinformationsvorrichtung, können aber auch für alle Funktionen der Fahrerinformationsvorrichtung entsprechend dargestellt sein. So kann sich z.B. das erste Menüfeld 31 auf den Lieblingssender des Benutzers beziehen, so dass nach Auswahl des entsprechenden Menüpunktes der Lieblingssender gespielt wird. Das zweite Feld 32 kann sich auf die Berechnung einer Fahrtroute zum Wohnort des Benutzers beziehen, das dritte Menüfeld 33 kann die Aktivierung einer Klimaanlage umfassen, während das vierte Menüfeld, z.B. der Anzeige des Durchschnittsverbrauchs zugeordnet sein kann. Über die Bedienelemente 4, 5, 6 können die einzelnen Menüpunkte zuerst ausgewählt und nach der Auswahl bestätigt werden. In einer weiteren Ausführungsform können die Bedienelemente auch zumindest teilweise als Softkeys ausgeführt sein, die benachbart zu der Anzeige angeordnet sind und jeweils einem Menüfeld zugeordnet sind. Betätigt ein Benutzer einen der Softkeys, so wird die dem Softkey zugewiesene Funktion ausgeführt. In einer weiteren Ausführungsform kann die Anzeige auch als ein berührungsempfindlicher Touchscreen ausgeführt sein, bei dem die Softkeys in der Anzeigenfläche selbst dargestellt werden.

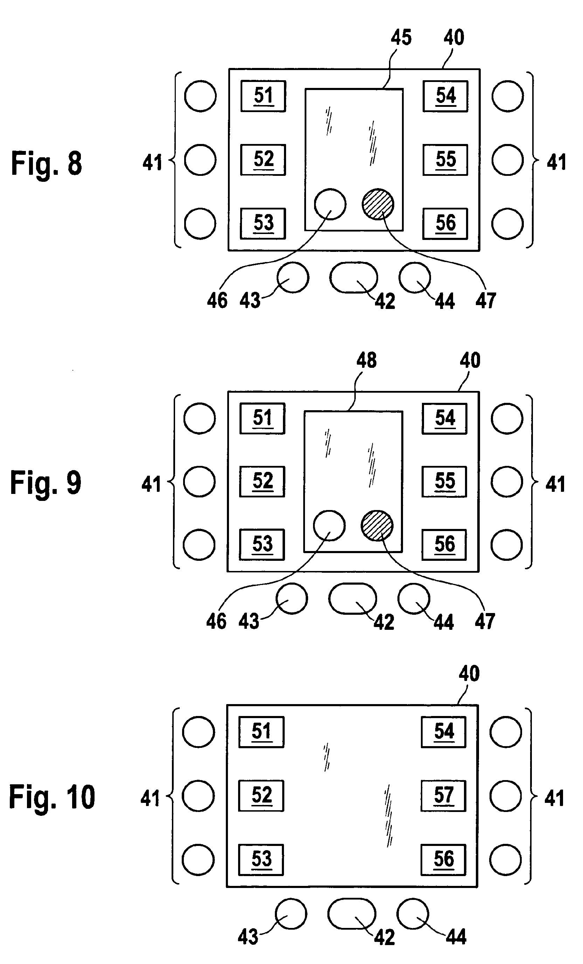

Eine entsprechende Ausführungsform mit Softkeys ist anhand der Figuren 8 bis 10 im weiteren erläutert.

Ein erstes Ausführungsbeispiel für eine Änderung der in der Figur 3 dargestellten Menüstruktur ist in den Figuren 4 und 5 dargestellt. Fährt ein Benutzer z.B. in Urlaub und gibt er in Folge dessen vermehrt über eine Buchstabeneingabe oder eine Listenauswahl Fahrziele ein, so stellt die Recheneinheit fest, dass sich die Anzahl der Fahrzieleingaben in einem Zeitraum von z.B. den letzten drei Tage stark erhöht hat. Daher wird in einem Abfragebildschirm gemäß dem Abfrageschritt 23 ein Benutzer gefragt, ob er den Menüpunkt Fahrzieleingabe, der in der Figur 4 mit dem Bezugszeichen 35 versehen ist, in die Menüauswahl aufnehmen will. Lehnt der Benutzer dies ab, so bleibt die Menüauswahl gemäß der Figur 3 unverändert. Ferner kann auch für den Fall, dass innerhalb einer vorgegebenen Zeit keine Benutzereingabe erfolgt, in einer Ausführungsform die Menüauswahl unverändert bleiben.

Wünscht der Fahrer jedoch eine Änderung, so wird eine Menüauswahl gemäß der Figur 5 dargestellt. Die von dem Benutzer getroffene Auswahl wird dem Fahrerinformationssystem 1 über die Bedieneinheit 3 mitgeteilt. Bei der Darstellung in der Figur 5 wird nunmehr die Fahrzieleingabe als erstes Menüfeld dargestellt. Die Menüpunkte 31, 32, 33 werden an die zweite, dritte und vierte Stelle verschoben. Der vierte Menüpunkt 34 wird aus der Anzeige gelöscht. Dies bedeutet jedoch nicht, dass dieser Menüpunkt nun überhaupt nicht mehr aufgerufen werden kann. Vielmehr ist es hierzu erforderlich, dass über die Bedieneinheit 3 ein anderes, unveränderbares Menü mit Untermenüs aufgerufen wird, um die entsprechende Funktion auszuwählen. In einer weiteren Ausführungsform ist es auch möglich, dass eine Bedienfunktion, solange sie in dem besonderen Menü gemäß der Figuren 3 bzw. 5 dargestellt wird, über ein übriges Bedienmenü nicht aufrufbar ist.

Ein weiteres Ausführungsbeispiel für eine erfindungsgemäße Abfrage ist anhand der Figuren 6 und 7 erläutert. Stellt die Recheneinheit 7 fest, dass die Häufigkeit der Auswahl von zwei Bedienfunktionen nicht ihrer Position in der Liste gemäß der Darstellung in der Figur 3 entspricht, so wird einem Benutzer ein Tausch der beiden Menüfelder vorgeschlagen. In der Figur 6 wird einem Benutzer beispielsweise ein Tausch des ersten Menüfeldes 31 mit dem zweiten Menüfeld 32 vorgeschlagen. Lehnt der Benutzer den Tausch ab, so bleibt das Bedienmenü gemäß der Figur 3 unverändert. Stimmt der Benutzer einer Änderung zu, so werden die beiden Menüfelder getauscht und entsprechend in der Anzeige dargestellt. Dies ist in der Figur 7 gezeigt. Die übrigen Menüfelder bleiben ungeändert.

Insbesondere kann z.B. die Häufigkeit während der letzten Fahrt, also z.B. seit Einschalten der Zündung erfasst werden. Ferner kann auch für einen längeren Zeitraum, z.B. für die letzten drei Tage oder für den letzten Monat, die Anzahl der Aufrufe gezählt werden. Ferner können auch die letzten zehn Fahrten für eine Häufigkeitsbestimmung berücksichtigt werden. In einer bevorzugten Ausführungsform wird dabei nicht nur die Bedienung selbst, sondern auch der Zeitpunkt einer Bedienung gespeichert, so dass Bedienungen, die außerhalb des betrachteten Zeitfensters liegen, für eine Häufigkeitsbestimmung nicht mehr berücksichtigt werden.

Weitere Ausführungsbeispiele für eine Ausführungsform mit Softkeys sind anhand der Figuren 8 bis 10 dargestellt. In der Figur 8 ist eine Anzeige 40 gezeigt, wobei auf beiden Seiten der Anzeige Softkeys 41 angeordnet sind. Die Softkeys sind dabei jeweils Bildschirmeinträgen zugeordnet. Ein erster Bildschirmeintrag 51 heißt z.B. "MP3", ein zweiter Bildschirmeintrag 52 heißt "Radio", ein dritter Bildschirmeintrag 53 heißt "Telefon", einer vierter Bildschirmeintrag 54 heißt "CD", ein fünfter Bildschirmeintrag 55 heißt "www" und ein sechster Bildschirmeintrag 56 heißt "E-Mail". Über die jeweils zugeordneten Softkeys 41, die jeweils benachbart zu den Bildschirmfeldern 51, 52, 53, 54, 55 und 56 angeordnet sind, kann die jeweils in Textform dargestellte Funktion aufgerufen werden. Zusätzlich sind weitere Steuerelemente benachbart zu der Anzeige 40 angeordnet. Hierzu ist eine Enter-Taste 42 vorgesehen. Links von der Enter-Taste ist eine Cursortaste 43 für eine Cursorsteuerung nach links. Rechts von der Enter-Taste 42 befindet sich eine Cursortaste 44 für eine Cursorsteuerung nach rechts. Die Anzeige 40 ist in einer Situation dargestellt, bei der es von dem der Anzeige 40 zugeordneten Fahrerinformationssystem ausgewertet worden ist, dass die Navigation wesentlich häufiger als das Internet aufgerufen wurde. In einem Abfragefenster 45 wird einem Benutzer die Frage angezeigt: "Da Sie in der Vergangenheit oft navigiert haben, möchten wir Sie fragen, ob Sie das Navigationsmenü in der obersten Menüebene erreichen wollen?" Über ein erstes Auswahlfeld 47, das bevorzugt in dem Abfragefenster 45 dargestellt ist, kann der Wechsel über eine Betätigung der Enter-Taste 42 abgelehnt werden. Will der Benutzer den Wechsel tatsächlich durchführen, kann er über die Cursortaste 43 die Auswahl zu dem weiteren dargestellten Auswahlfeld 46 verschieben. Betätigt er nun die Enter-Taste 42, wird der Wechsel vorgenommen. Indem das Auswahlfeld 47, das einer Ablehnung einer Änderung zugeordnet ist, zunächst eingestellt wird, wird eine fehlerhafte Umbelegung vermieden, die z.B. durch eine versehentliche Betätigung der Enter-Taste 42 hervorgerufen werden könnte.

In einem nächsten Schritt wird nun in der Figur 9 der Benutzer gefragt, ob der selten benutzte Menüpunkt "www", der für einen Aufruf des Internets steht, durch die Funktion "Navi", die für die Navigation steht, ersetzt werden soll. Entsprechend einer Auswahl aus dem Abfragefenster 45 kann über die dargestellten Auswahlfelder 46, 47 die Bestätigung oder die Ablehnung in einem geänderten Abfragefenster 48 eingegeben werden. Durch die zusätzliche Abfrage, ob ein bestimmtes Feld aus dem Hauptmenü gelöscht werden soll, wird vermieden, dass eine Löschung vorgenommen wird, die ein Benutzer gar nicht vornehmen möchte. Lehnt der Benutzer bei einer Abfrage gemäß der Figur 9 die Änderung ab, so wird ihm ein weiterer Menüpunkt vorgeschlagen, der gegebenenfalls aus dem Hauptmenü gelöscht werden soll.

Hat der Benutzer sowohl der Einführung des "Navi"-Menüpunktes in das Hauptmenü zugestimmt und hat er auch zugestimmt, den Eintrag "www" aus dem Hauptmenü zu entfernen, so erscheint die Anzeige 40 im Folgenden, wie sie in der Figur 10 dargestellt ist. Die Menüpunkte 51, 52, 53, 54, und 56 sind unverändert. Anstelle des fünften Menüpunktes "www" wird nun ein siebter Menüpunkt 57 "Navi" in der Anzeige 40 dargestellt. Das Abfragefenster 45, 48, das lediglich einer Abfrage dient, wird aus der Anzeige 40 gelöscht. Ein Benutzer kann nun die geänderten Funktionen in gewohnter Weise über die Softkeys 41 auswählen, die den Funktionen jeweils zugeordnet sind.

## Patentansprüche

1. Bedienvorrichtung (1) mit einer Menüsteuerung umfassend wenigstens eine Recheneinheit (7), insbesondere für ein Fahrerinformationssystem, mit einer Anzeige (2) zur Darstellung von Menüpunkten (31-35) in einer Anordnung in einer vorgegebenen Reihenfolge, die zum Vorschlagen einer geänderten Anordnung der Menüpunkte (31-35) zur Bestätigung durch einen Benutzer für den Fall ausgelegt ist, dass die Häufigkeit der Auswahl wenigstens zweier Menüpunkte (31-35) von der Reihenfolge dieser Menüpunkte (31-35) in der angezeigten Auswahl um wenigstens ein vorgegebenes Maß abweicht, und die zu einer Durchführung einer Änderung einer Anordnung der Menüpunkte durch die Recheneinheit (7) erst nach einer Bestätigung durch den Benutzer ausgelegt ist.

2. Bedienvorrichtung nach Anspruch 1, **gekennzeichnet durch** eine Eingabeeinheit **(3)** zur Auswahl einer geänderten vorgegebenen Reihenfolge der Menüpunkte zur anschließenden Bestätigung.

3. Bedienvorrichtung nach einem der vorherigen Ansprüche, **gekennzeichnet durch** den Menüpunkten in der Anzeige zugeordnete Softkeys **(41)** neben der Anzeige.

4. Verfahren zur **Anpassung einer Menüstruktur** in einer Anzeige **einer Bedienvorrichtung gemäß Anspruch 1,**
wobei auswählbare Menüpunkte **(31-35)** in einer vorgegebenen Reihenfolge **von einer Anzeige (2)** angezeigt werden,
wobei das Benutzerverhalten bei der Auswahl der Menüpunkte **von einer Recheneinheit (7)** erfasst wird,
wobei dem Benutzer in Abhängigkeit von dem Benutzerverhalten **von der Recheneinheit (7)** eine Änderung der vorgegebenen Reihenfolge **der** auswählbaren Menüpunkte **(31-35) in der Anzeige (2)** zur Bestätigung dann vorgeschlagen wird, wenn die Häufigkeit der Auswahl **durch eine Bedieneinheit (3)** wenigstens zweier Menüpunkte **(31-35)** von der Reihenfolge dieser Menüpunkte **(31-35)** in der angezeigten Auswahl um wenigstens ein vorgegebenes Maß abweicht,
und wobei eine Änderung der vorgegebenen Reihenfolge der auswählbaren Menüpunkte **durch die Recheneinheit (7)** erst dann erfolgt, wenn der Benutzer die Änderung **mit der Bedieneinheit (3)** bestätigt hat.

5. Verfahren zur Darstellung einer Menüauswahl nach Anspruch 4. **dadurch gekennzeichnet dass** eine Ausgabe eines Vorschlags einer anderen Reihenfolge **in der Anzeige (2)** durch eine Benutzereingabe **mit der Bedieneinheit (3)** ausgelöst wird.

## Claims

1. Operator control apparatus (1) with menu control comprising at least one computation unit (7), particularly for a driver information system, having a display (2) for presenting menu items (31 - 35) in an arrangement in a prescribed order that is designed to propose an amended arrangement of the menu items (31 - 35) for confirmation by a user if the frequency of the selection of at least two menu items (31 - 35) differs from the order of said menu items (31 - 35) in the displayed selection by at least a prescribed amount, and that is designed to carry out an amendment for an arrangement of the menu items by the computation unit (7) only after confirmation by the user.

2. Operator control apparatus according to Claim 1, **characterized by** an input unit (3) for selecting an amended prescribed order for the menu items for subsequent confirmation.

3. Operator control apparatus according to either of the preceding claims, **characterized by** soft keys (41) beside the display that are associated with the menu items in the display.

4. Method for customizing a menu structure in a display of an operator control apparatus according to Claim 1,
wherein selectable menu items (31 - 35) are displayed in a prescribed order by a display (2),
wherein the user behaviour during selection of the menu items is captured by a computation unit (7),
wherein the computation unit (7) proposes to the user, on the basis of the user behaviour, an amendment for the prescribed order of the selectable menu items (31 - 35) in the display (2) for confirmation when the frequency of the selection of at least two menu items (31 - 35) by an operator control unit (3) differs from the order of said menu items (31 - 35) in the displayed selection by at least a prescribed amount,
and wherein an amendment for the prescribed order of the selectable menu items by the computation unit (7) is made only when the user has confirmed the amendment using the operator control unit (3).

5. Method for presenting a menu selection according to Claim 4, **characterized in that** output of a proposal for another order in the display (2) is initiated by a user input using the operator control unit (3).

## Revendications

1. Dispositif de commande (1) avec une commande de menu comprenant au moins un ordinateur (7), en particulier pour un système d'information de conducteur, comprenant un affichage (2) pour représenter des points de menu (31-35) dans un agencement dans une succession prédéfinie qui est conçue pour proposer un agencement modifié des points de menu (31-35) devant être confirmé par un utilisateur au cas où la fréquence de la sélection d'au moins deux points de menu (31-35) s'écarte de la succession de ces points de menu (31-35) dans la sélection indiquée d'au moins une mesure prédéfinie, et qui est conçue pour réaliser une modification de l'agencement des points de menu par l'ordinateur (7) uniquement après confirmation par l'utilisateur.

2. Dispositif de commande selon la revendication 1, **caractérisé par** une unité de saisie (3) pour sélectionner une succession prédéfinie modifiée des points de menu en vue d'une confirmation subséquente.

3. Dispositif de commande selon l'une quelconque des revendications précédentes, **caractérisé par** des touches de fonction "softkey" (41) à côté de l'affichage, associées aux points de menu dans l'affichage.

4. Procédé pour l'adaptation d'une structure de menu dans un affichage d'un dispositif de commande selon la revendication 1,
des points de menu sélectionnables (31-35) étant indiqués dans une succession prédéfinie par un affichage (2),
le comportement de l'utilisateur lors de la sélection des points de menu étant détecté par un ordinateur (7),
l'utilisateur, en fonction du comportement de l'utilisateur, recevant de l'ordinateur (7) une proposition de modification de la succession prédéfinie des points de menu sélectionnables (31-35) dans l'affichage (2) en vue d'une confirmation, si la fréquence de la sélection par une unité de commande (3) d'au moins deux points de menu (31-35) s'écarte de la succession de ces points de menu (31-35) dans la sélection indiquée d'au moins une mesure prédéfinie,
et une modification de la succession prédéfinie des points de menu sélectionnables étant effectuée par l'ordinateur (7) seulement lorsque l'utilisateur a confirmé la modification avec l'unité de commande (3).

5. Procédé pour représenter une sélection de menu selon la revendication 4, **caractérisé en ce qu'**un lancement d'une proposition d'une autre succession est déclenché dans l'affichage (2) par une saisie de l'utilisateur avec l'unité de commande (3).
